# EUROPEAN PATENT APPLICATION

(11) **EP 4 586 698 A1**
(43) Date of publication of application: **16.07.2025**
(21) Application number: 23870344.1
(22) Date of filing: 13.09.2023
(51) Int. Cl.: H04W 52/02

(54) **NETWORK CONFIGURATION METHOD AND APPARATUS, AND DEVICE**

(30) Priority: 26.09.2022 CN 202211174807
(71) Applicant: Huawei Technologies Co., Ltd., Shenzhen, Guangdong 518129 (CN)
(72) Inventor: LU, Yujiao, Shenzhen, Guangdong 518129 (CN); FAN, Qiang, Shenzhen, Guangdong 518129 (CN)
(74) Representative: Maiwald GmbH
(86) International application number: PCT/CN2023/118646
(87) International publication number: WO 2024/067107

(57) **Abstract**

This application provides a network configuration method, an apparatus, and a device. In the method, a terminal device may receive a plurality of groups of DRX parameters, and related parameters such as DRX cycles in the plurality of groups of DRX parameters are configured differently, so that DRX configurations can better match features, such as data arrival time and data amount, of different data flows. In this way, the terminal device can wake up in time when data arrives, and monitors a PDCCH for a proper period of time, to ensure a service delay and user experience. In addition, monitoring time is not longer than time needed for the data amount, helping reduce energy consumption of the terminal device.

## Description

This application claims priority to Chinese Patent Application No. 202211174807.8, filed with the China National Intellectual Property Administration on September 26, 2022 and entitled "NETWORK CONFIGURATION METHOD, APPARATUS, AND DEVICE", which is incorporated herein by reference in its entirety.

### TECHNICAL FIELD

This application relates to the field of communication technologies, and in particular, to a network configuration method, an apparatus, and a device.

### BACKGROUND

In a new radio (new radio, NR) system, an access network device may configure discontinuous reception (discontinuous reception, DRX) for a terminal device. In this case, in each DRX cycle, the terminal device turns on a receiver and enters a DRX active state only in a period of time for monitoring, to monitor downlink control signaling, and turns off the receiver and enters a DRX sleep state in other time in the DRX cycle. This can reduce energy consumption of the terminal device. However, when the terminal device simultaneously processes multiple flows of data of a service (for example, an extended reality (extended reality, XR) service), arrival time of a plurality of data flows may be mutually staggered. Current DRX configurations may not match features of some data flows in the plurality of data flows. As a result, delays of some data flows are large or the terminal device is still in a monitoring state when no data transmission is performed. Consequently, a network capacity is reduced, and this is not conducive to reducing energy consumption of the terminal device.

### SUMMARY

This application provides a network configuration method, an apparatus, and a device. In the method, a plurality of groups of DRX parameters are respectively configured for a plurality of data flows, and each group of DRX parameters matches a time feature of a corresponding data flow. In this way, a delay of the data flow is reduced, and this helps improve a network capacity and reduce energy consumption of the terminal device.

According to a first aspect, this application provides a network configuration method. The method may be performed by a terminal device, or may be performed by a component (for example, a processor, a chip, or a chip system) of a terminal device, or may be performed by a logic module or software that can implement all or some of functions of a terminal device. The terminal device receives a plurality of groups of discontinuous reception DRX parameters, where any group of DRX parameters in the plurality of groups of DRX parameters includes a DRX cycle, and the DRX cycle is determined based on a data arrival periodicity of a data flow corresponding to the group of DRX parameters or a transmission periodicity of data on a carrier corresponding to the group of DRX parameters. When the any group of DRX parameters indicates that the terminal device is in an active state, the terminal device monitors a physical downlink control channel PDCCH.

In the method, the terminal device may receive a plurality of groups of DRX parameters configured for different data flows, and a related parameter such as a DRX cycle in each group of DRX parameters is configured differently, so that the DRX parameters can better match features of different data flows, to avoid an extra delay, reduce delays of the data flows, and help improve a network capacity and reduce energy consumption of the terminal device.

In a possible implementation, the terminal device receives radio resource control RRC signaling. The RRC signaling includes a plurality of DRX configuration information elements. One DRX configuration information element corresponds to one group of DRX parameters, the DRX configuration information element includes a DRX index, and the DRX index is used to associate a corresponding DXR parameter.

In the method, the terminal device obtains the plurality of groups of DRX parameters by receiving the RRC signaling, for example, receiving the plurality of DRX configuration information elements, where the DRX configuration information element carries the DRX index.

In a possible implementation, the any group of DRX parameters in the plurality of groups of DRX parameters further includes one or more of the following parameters:
a DRX on-duration timer (drx-onDurationTimer), indicating duration in which the terminal device is in the active state;
a DRX inactivity timer (drx-InactivityTimer), indicating duration in which the terminal device monitors, after receiving a PDCCH for initial transmission, the PDCCH;
a DRX hybrid automatic repeat request round trip time timer (drx-HARQ-RTT-TimerUL/drx-HARQ-RTT-TimerDL), indicating a minimum quantity of interval symbols between next retransmission and current transmission;
a DRX retransmission timer (drx-RetransmissionTimerUL/drx-RetransmissionTimerDL), indicating maximum duration for which the terminal device waits until data retransmission when the terminal device is in the active state;
a DRX start offset (drx-SlotOffset), indicating a start subframe of the DRX cycle; and
a DRX slot offset (drx-StartOffset), indicating duration by which starting of the DRX on-duration timer is delayed backward from a front boundary of the start subframe of the DRX cycle.

In a possible implementation, when any DRX configuration information element does not include all parameters in a corresponding group of DRX parameters, a value of a parameter that is not included is a default value, and the default value is a parameter value configured by an access network device according to a protocol.

In the method, the terminal device obtains some or all parameters in the DRX parameters by receiving the RRC signaling. If the RRC signaling does not include some parameters in the DRX parameters, values of the some parameters comply with values configured by the access network device according to the current protocol.

In a possible implementation, DRX cycles and/or DRX start offsets of any two groups of DRX parameters in the plurality of groups of DRX parameters are different. A start position of the DRX on-duration timer in the any group of DRX parameters is configured based on the DRX cycle, the DRX start offset, and the DRX slot offset in the group of DRX parameters.

In the method, when the DRX cycles and/or the DRX start offsets of the any two groups of DRX parameters are different, each group of DRX parameters can match data flows with different time features, and in this case, the terminal device may select to configure different DRX parameters based on the features of different data flows, to avoid an extra service delay.

In a possible implementation, the RRC signaling further includes data radio bearers DRBs or logical channels LCHs respectively associated with the plurality of groups of DRX parameters. Any DRX configuration information element in the RRC signaling carries a corresponding DRB identifier, a corresponding LCH identifier, or a corresponding logical channel group LCG identifier; or any DRB configuration information element in the RRC signaling carries a corresponding DRX index; or any LCH configuration information element in the RRC signaling carries a corresponding DRX index.

In the method, the terminal device obtains a bearer or a logical channel related to each group of DRX parameters by receiving the RRC signaling, to obtain an association relationship between the DRX parameter and the data flow.

In a possible implementation, a first preset parameter is received, where the first preset parameter indicates a value of the DRX inactivity timer.

In the method, the terminal device may configure a corresponding DRX inactivity timer based on the value of the DRX inactivity timer indicated by the first preset parameter. For example, the first preset parameter may be a value of a DRX inactivity timer in a DRX parameter specified in a protocol, or the first preset parameter may be a value of a DRX inactivity timer specified in the RRC signaling.

In a possible implementation, when a PDCCH indicating initial transmission is received, the terminal device starts or restarts a DRX inactivity timer configured based on the first preset parameter; or
when a PDCCH indicating initial transmission is received, the terminal device starts or restarts a DRX inactivity timer configured according to a protocol.

In a possible implementation, when a PDCCH indicating uplink initial transmission is received, the terminal device determines an LCH that is for data transmission on a physical uplink shared channel PUSCH corresponding to the PDCCH, and then starts or restarts a DRX inactivity timer configured based on a DRX parameter associated with the LCH, or starts or restarts a DRX inactivity timer configured based on a DRX parameter associated with a DRB corresponding to the LCH, or starts or restarts a DRX inactivity timer configured based on a DRX parameter associated with an LCG to which the LCH belongs.

In the method, when the uplink initial transmission occurs, if a source of the data is known, the terminal device may select a corresponding DRX inactivity timer based on the logical channel that is for uplink data transmission.

In a possible implementation, when a PDCCH indicating downlink initial transmission is received, the terminal device decodes data transmitted on a physical downlink shared channel PDSCH corresponding to the PDCCH, determines an LCH for buffering the data, and then starts or restarts a DRX inactivity timer configured based on a DRX parameter associated with the LCH, or starts or restarts a DRX inactivity timer configured based on a DRX parameter associated with a DRB corresponding to the LCH, or starts or restarts a DRX inactivity timer configured based on a DRX parameter associated with an LCG to which the LCH belongs.

In the method, when the downlink initial transmission occurs, the terminal device may select a corresponding DRX inactivity timer based on a source of initially transmitted data.

In a possible implementation, when a PDCCH indicating uplink initial transmission is received, the terminal device determines a corresponding LCH according to a logical channel priority LCP rule, and then starts or restarts a DRX inactivity timer configured based on a DRX parameter associated with the LCH, or starts or restarts a DRX inactivity timer configured based on a DRX parameter associated with a DRB corresponding to the LCH, or starts or restarts a DRX inactivity timer configured based on a DRX parameter associated with an LCG to which the LCH belongs.

In the method, when the uplink initial transmission occurs, if a source of the data is unknown, the terminal device may select a corresponding DRX inactivity timer according to the LCP rule.

In a possible implementation, the terminal device receives a second preset parameter, where the second preset parameter indicates a value of the DRX hybrid automatic repeat request round trip time timer.

In the method, the terminal device may configure a corresponding hybrid automatic repeat request round trip time timer based on the value of the hybrid automatic repeat request round trip time timer indicated by the second preset parameter. For example, the second preset parameter may be a value of a DRX hybrid automatic repeat request round trip time timer in a DRX parameter specified in a protocol, or the second preset parameter may be a value of a DRX hybrid automatic repeat request round trip time timer specified in the RRC signaling.

In a possible implementation, when a physical uplink shared channel PUSCH is sent, the terminal device starts or restarts an uplink DRX hybrid automatic repeat request round trip time timer configured based on the second preset parameter; and when the uplink DRX hybrid automatic repeat request round trip time timer expires, the terminal device starts a corresponding uplink DRX retransmission timer.

In the method, for uplink transmission, the terminal device may determine the uplink DRX hybrid automatic repeat request round trip time timer based on the second preset parameter.

In a possible implementation, when a PDSCH is received and a corresponding hybrid automatic repeat request HARQ feedback is sent, the terminal device starts or restarts a downlink DRX hybrid automatic repeat request round trip time timer configured based on the second preset parameter; and when the downlink DRX hybrid automatic repeat request round trip time timer expires, the terminal device starts a corresponding downlink DRX retransmission timer.

In the method, for downlink transmission, the terminal device may determine the downlink DRX hybrid automatic repeat request round trip time timer based on the second preset parameter.

In a possible implementation, when a PUSCH is sent, the terminal device determines an LCH that is for data transmission on the PUSCH, and then starts or restarts an uplink DRX hybrid automatic repeat request round trip time timer configured based on a DRX parameter associated with the LCH, or starts or restarts an uplink DRX hybrid automatic repeat request round trip time timer configured based on a DRX parameter associated with a DRB corresponding to the LCH, or starts or restarts an uplink DRX hybrid automatic repeat request round trip time timer configured based on a DRX parameter associated with an LCG to which the LCH belongs; and when the uplink DRX hybrid automatic repeat request round trip time timer expires, the terminal device starts a corresponding uplink DRX retransmission timer.

In the method, for uplink transmission, the terminal device may select a corresponding DRX hybrid automatic repeat request round trip time timer based on the logical channel that is for uplink data transmission.

In a possible implementation, when a PDSCH is received, the terminal device decodes data on the PDSCH, and determines an LCH for buffering the data. When a HARQ feedback of the PDSCH is sent, the terminal device starts or restarts a downlink DRX hybrid automatic repeat request round trip time timer configured based on a DRX parameter associated with the LCH, or starts or restarts a downlink DRX hybrid automatic repeat request round trip time timer configured based on a DRX parameter associated with a DRB corresponding to the LCH, or starts or restarts a downlink DRX hybrid automatic repeat request round trip time timer configured based on a DRX parameter associated with an LCG to which the LCH belongs. When the downlink DRX hybrid automatic repeat request round trip time timer expires, the terminal device starts a corresponding downlink DRX retransmission timer.

In the method, for downlink transmission, the terminal device may select a corresponding DRX hybrid automatic repeat request round trip time timer based on a source of the downlink data.

In a possible implementation, the RRC signaling further includes carriers respectively associated with the plurality of groups of DRX parameters, and the carrier is associated with a cell or a bandwidth part BWP. Any DRX configuration information element in the RRC signaling carries a corresponding cell identifier, a corresponding cell group identifier, or a corresponding BWP identifier; or any cell configuration information element in the RRC signaling carries a corresponding DRX index; or any cell group configuration information element in the RRC signaling carries a corresponding DRX index; or any BWP configuration information element in the RRC signaling carries a corresponding DRX index.

In the method, the terminal device obtains a cell or a BWP related to each group of DRX parameters by receiving the RRC signaling, to obtain an association relationship between the DRX parameter and the carrier.

In a possible implementation, when a PDCCH indicating initial transmission is received on a first carrier, the terminal device starts or restarts a DRX inactivity timer corresponding to the first carrier.

In the method, the terminal device may determine, based on the association relationship between the carrier and the DRX parameter, a DRX inactivity timer corresponding to a specified carrier.

In a possible implementation, when data transmission is performed on a first carrier, the terminal device starts or restarts a DRX hybrid automatic repeat request round trip time timer corresponding to the first carrier; and when the DRX hybrid automatic repeat request round trip time timer expires, the terminal device starts a corresponding DRX retransmission timer.

In the method, the terminal device may determine, based on the association relationship between the carrier and the DRX parameter, a DRX hybrid automatic repeat request round trip time timer corresponding to a specified carrier.

In a possible implementation, the terminal device receives a plurality of groups of secondary DRX parameters corresponding to the plurality of groups of DRX parameters, where the secondary DRX parameter includes a DRX on-duration timer and a DRX inactivity timer.

In the method, the terminal device may receive the plurality of groups of secondary DRX parameters corresponding to the plurality of groups of DRX parameters, so that DRX parameters of different data flows better match transmission rhythms of the data flows in a low-frequency serving cell and a high-frequency serving cell. This helps reduce energy consumption of the terminal device.

In a possible implementation, the terminal device may configure one corresponding group of secondary DRX parameters for each group of DRX parameters, or specify a group of corresponding DRX parameters for each group of secondary DRX parameters, or configure the plurality of groups of secondary DRX parameters based on one group of specified DRX parameters.

In the method, the terminal device may configure the secondary DRX parameter in a plurality of manners, and the configuration method is more flexible.

According to a second aspect, this application provides another network configuration method. The method may be performed by an access network device, or may be performed by a component (for example, a processor, a chip, or a chip system) of an access network device, or may be performed by a logic module or software that can implement all or some of functions of an access network device. The access network device determines a plurality of groups of DRX parameters, and sends the plurality of groups of DRX parameters to a terminal device. Any group of DRX parameters in the plurality of groups of DRX parameters includes a DRX cycle, and the DRX cycle is determined based on a data arrival periodicity of a data flow corresponding to the group of DRX parameters or a transmission periodicity of data on a carrier.

In the method, the access network device may configure a plurality of groups of DRX parameters for different data flows, and a related parameter such as a DRX cycle in each group of DRX parameters is configured differently, so that DRX configurations can better match features of different data flows, to avoid an extra delay, reduce delays of the data flows, and help improve a network capacity and reduce energy consumption of the terminal device.

In a possible implementation, the access network device sends RRC signaling to the terminal device. The RRC signaling includes a plurality of DRX configuration information elements. One DRX configuration information element corresponds to one group of DRX parameters, the DRX configuration information element includes a DRX index, and the DRX index is used to associate a corresponding DXR parameter.

In the method, the access network device configures the plurality of groups of DRX parameters for the terminal device by using the RRC signaling, for example, configures the plurality of DRX configuration information elements, where the DRX configuration information element carries the DRX index.

In a possible implementation, the any group of DRX parameters in the plurality of groups of DRX parameters further includes one or more of the following parameters:
a DRX on-duration timer, indicating duration in which the terminal device is in the active state;
a DRX inactivity timer, indicating duration in which the terminal device monitors, after receiving a PDCCH for initial transmission, the PDCCH;
a DRX hybrid automatic repeat request round trip time timer, indicating a minimum quantity of interval symbols between next retransmission and current transmission;
a DRX retransmission timer, indicating maximum duration for which the terminal device waits until data retransmission when the terminal device is in the active state;
a DRX start offset, indicating a start subframe of the DRX cycle; and
a DRX slot offset, indicating duration by which starting of the DRX on-duration timer is delayed backward from a front boundary of the start subframe of the DRX cycle.

In a possible implementation, when any DRX configuration information element does not include all parameters in a corresponding group of DRX parameters, a value of a parameter that is not included is a default value, and the default value is a parameter value configured by an access network device according to a protocol.

In the method, the access network device may configure some or all parameters in the DRX parameters for the terminal device by using the RRC signaling. If the RRC signaling does not include some parameters in the DRX parameters, values of the some parameters comply with values configured by the access network device according to the current protocol.

In a possible implementation, DRX cycles and/or DRX start offsets of any two groups of DRX parameters in the plurality of groups of DRX parameters are different. A start position of the DRX on-duration timer in the any group of DRX parameters is configured based on the DRX cycle, the DRX start offset, and the DRX slot offset in the group of DRX parameters.

In the method, when the DRX cycles and/or the DRX start offsets of the any two groups of DRX parameters are different, each group of DRX parameters can match data flows with different time features.

In a possible implementation, the RRC signaling further includes data radio bearers DRBs or logical channels LCHs respectively associated with the plurality of groups of DRX parameters. Any DRX configuration information element in the RRC signaling carries a corresponding DRB identifier, a corresponding LCH identifier, or a corresponding logical channel group LCG identifier; or any DRB configuration information element in the RRC signaling carries a corresponding DRX index; or any LCH configuration information element in the RRC signaling carries a corresponding DRX index.

In the method, the access network device may specify a related bearer or logical channel for each group of DRX parameters by using the RRC signaling, to establish an association relationship between the DRX parameter and the data flow.

In a possible implementation, the access network device sends a first preset parameter to the terminal device, where the first preset parameter indicates a value of the DRX inactivity timer.

In the method, the access network device may directly specify the value of the DRX inactivity timer for the terminal device.

In a possible implementation, the access network device sends a second preset parameter to the terminal device, where the second preset parameter indicates a value of the DRX hybrid automatic repeat request round trip time timer.

In the method, the access network device may directly specify the value of the DRX hybrid automatic repeat request round trip time timer for the terminal device.

In a possible implementation, the RRC signaling further includes carriers respectively associated with the plurality of groups of DRX parameters, and the carrier is associated with a cell or a bandwidth part BWP. Any DRX configuration information element in the RRC signaling carries a corresponding cell identifier, a corresponding cell group identifier, or a corresponding BWP identifier; or any cell configuration information element in the RRC signaling carries a corresponding DRX index; or any cell group configuration information element in the RRC signaling carries a corresponding DRX index; or any BWP configuration information element in the RRC signaling carries a corresponding DRX index.

In the method, the access network device may specify an associated cell or BWP for each group of DRX parameters by using the RRC signaling, to establish an association relationship between the DRX parameter and the carrier.

In a possible implementation, the access network device sends, to the terminal device, a plurality of groups of secondary DRX parameters corresponding to the plurality of groups of DRX parameters, where the secondary DRX parameter includes a DRX on-duration timer and a DRX inactivity timer.

In the method, the access network device may configure, for the terminal device, the plurality of groups of secondary DRX parameters corresponding to the plurality of groups of DXR parameters, so that DRX parameters of different data flows better match transmission rhythms of the data flows in a low-frequency serving cell and a high-frequency serving cell. This helps reduce energy consumption of the terminal device.

According to a third aspect, this application provides a communication apparatus. The communication apparatus may be a terminal device, or may be an apparatus in a terminal device, or may be an apparatus that can be used together with a terminal device. In a design, the communication apparatus may include a one-to-one corresponding module for performing the method/operation/step/action described in the first aspect and any one of the possible implementations of the first aspect. The module may be implemented by a hardware circuit, software, or a combination of a hardware circuit and software. In a design, the communication apparatus may include a processing unit and a communication unit.

For specific descriptions of the method/operation/step/action performed by the terminal device, refer to corresponding descriptions in the first aspect and any one of the possible implementations of the first aspect. Details are not described herein again. It may be understood that the communication apparatus may also achieve effects that can be achieved in the first aspect.

According to a fourth aspect, this application provides another communication apparatus. The communication apparatus may be an access network device, or may be an apparatus in an access network device, or may be an apparatus that can be used together with an access network device. In a design, the communication apparatus may include a one-to-one corresponding module for performing the method/operation/step/action described in the second aspect and any one of the possible implementations of the second aspect. The module may be implemented by a hardware circuit, software, or a combination of a hardware circuit and software. In a design, the communication apparatus may include a processing unit and a communication unit.

For specific descriptions of the method performed by the access network device, refer to corresponding descriptions in the second aspect and any one of the possible implementations of the second aspect. Details are not described herein again. It may be understood that the communication apparatus may also achieve effects that can be achieved in the second aspect.

According to a fifth aspect, this application provides a terminal device, including a processor. The processor is coupled to a memory. The memory is configured to store instructions. When the instructions are executed by the processor, the terminal device is enabled to implement the method in the first aspect and any one of the possible implementations of the first aspect.

According to a sixth aspect, this application provides an access network device, including a processor. The processor is coupled to a memory. The memory is configured to store instructions. When the instructions are executed by the processor, the access network device is enabled to implement the method in the second aspect and any one of the possible implementations of the second aspect.

According to a seventh aspect, this application provides a communication system. The communication system includes one or more of the communication apparatuses or devices provided in the third aspect to the sixth aspect. For example, the communication system includes the communication apparatuses provided in the third aspect and the fourth aspect, or the communication system includes the access network device provided in the fifth aspect and the terminal device provided in the sixth aspect.

According to an eighth aspect, this application provides a computer-readable storage medium, where the computer-readable storage medium stores instructions, and when the instructions are run on a computer, the computer is enabled to perform the method in the first aspect and the second aspect, and any one of the possible implementations of the first aspect and the second aspect.

According to a ninth aspect, this application provides a chip system. The chip system includes a processor and an interface, and may further include a memory, configured to implement functions in the method in the first aspect and the second aspect, and any one of the possible implementations of the first aspect and the second aspect. The chip system may include a chip, or may include a chip and another discrete device.

According to a tenth aspect, this application provides a computer program product, including instructions. When the instructions are run on a computer, the computer is enabled to perform the method in the first aspect and the second aspect, and any one of the possible implementations of the first aspect and the second aspect.

### BRIEF DESCRIPTION OF DRAWINGS

FIG. 1 is a diagram of a communication system according to this application;
FIG. 2 is a diagram of arrival time of multi-flow data;
FIG. 3 is a diagram of arrival time of multi-flow data of a multi-cell group;
FIG. 4 is a schematic flowchart of a network configuration method according to this application;
FIG. 5 is a diagram of multi-flow data and a plurality of corresponding groups of DRX cycles according to this application;
FIG. 6 is a diagram of multi-carrier and a plurality of corresponding groups of DRX cycles according to this application;
FIG. 7 is a diagram of correspondences between a plurality of groups of DRX parameters and secondary DRX parameters according to this application;
FIG. 8 is a diagram of a communication apparatus according to this application; and
FIG. 9 is a diagram of a communication device according to this application.

### DESCRIPTION OF EMBODIMENTS

In this application, "/" may indicate an "or" relationship between associated objects. For example, A/B may indicate A or B. In addition, "and/or" may indicate that there are three relationships between associated objects. For example, A and/or B may indicate the following three cases: Only A exists, both A and B exist, and only B exists, where A and B may be singular or plural. For ease of description of technical solutions of this application, in this application, terms such as "first" and "second" may be used to distinguish between technical features with same or similar functions. The terms such as "first" and "second" do not limit a quantity or an execution sequence, and the terms such as "first" and "second" do not indicate a definite difference. In this application, the word such as "example" or "for example" indicates an example, evidence, or a description. Any embodiment or design solution described as "example" or "for example" should not be explained as being more preferred or having more advantages than another embodiment or design solution. The word such as "example" or "for example" is intended to present a related concept in a specific manner for ease of understanding.

The following describes the technical solutions of this application with reference to the accompanying drawings in this application.

This application provides a network configuration method to resolve a problem that, because current DRX configurations may not match features of some data flows in a plurality of data flows, delays of some data flows are large or a terminal device is still in a monitoring state when no data transmission is performed. In the method, a plurality of groups of DRX parameters may be respectively configured for the plurality of data flows, and each group of DRX parameters matches a time feature of a corresponding data flow. In this way, a delay of the data flow is reduced, and this helps improve a network capacity and reduce energy consumption of the terminal device.

### I. Related concepts in this application

### 1. Communication system in this application

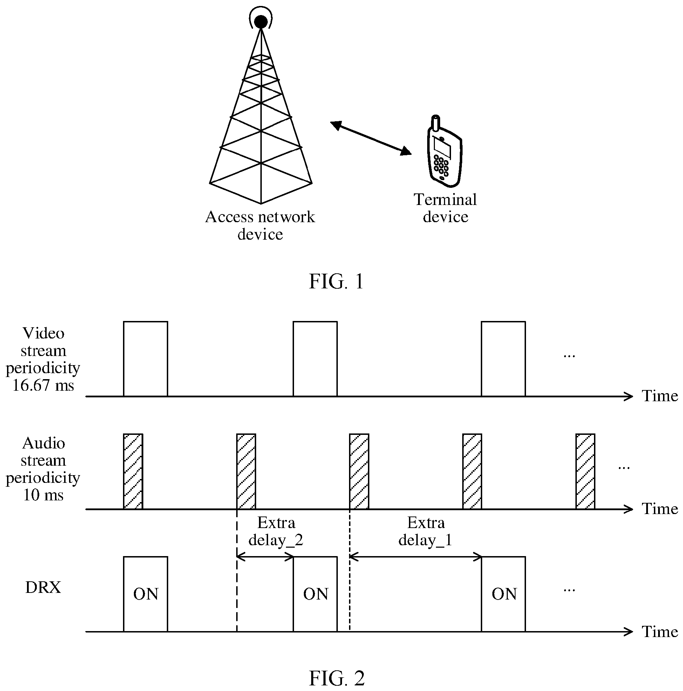

The network configuration method provided in this application may be applied to the communication system, and may specifically be applied to air interface communication between a terminal device and an access network device. For example, FIG. 1 is a diagram of a communication system according to this application. The communication system includes a terminal device and an access network device. The terminal device and the access network device are communicatively connected.

The communication system mentioned in this application includes but is not limited to: a narrow band-internet of things (narrow band-Internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronization code division multiple access (time division-synchronization code division multiple access, TD-SCDMA) system, a long term evolution (long term evolution, LTE) system, three application scenarios of a 5G mobile communication system: enhanced mobility broadband (enhanced mobility broadband, eMBB), ultra-reliable and low-latency communications (ultra-reliable and low-latency communications, URLLC), and enhanced machine-type communication (enhanced machine-type communication, eMTC), and a future communication system (such as 6G/7G).

The terminal device is also be referred to as user equipment (user equipment, UE), a mobile station (mobile station, MS), a mobile terminal (mobile terminal, MT), or the like, and is a device that provides a user with voice and/or data connectivity, for example, a handheld device or a vehicle-mounted device having a wireless connection function. Currently, for example, the terminal device is a mobile phone (mobile phone), a tablet computer, a notebook computer, a palmtop computer, a mobile internet device (mobile internet device, MID), a wearable device, an uncrewed aerial vehicle, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a terminal device in a 5G network, a terminal device in a future evolved PLMN network, a terminal device in a future communication system, or the like.

The access network device is a radio access network (radio access network, RAN) node (or device) that connects a terminal device to a wireless network, and may also be referred to as a base station. Currently, for example, the RAN node is a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), a satellite in a satellite communication system, a radio controller in a cloud radio access network (cloud radio access network, CRAN) scenario, a wearable device, an uncrewed aerial vehicle, a device in an internet of vehicles (for example, a vehicle-to-everything (vehicle-to-everything, V2X) device), a communication device in device-to-device (device-to-device, D2D) communication, or the like. In addition, in a network structure, the access network device may include a central unit (central unit, CU) node, a distributed unit (distributed unit, DU) node, or a RAN device including a CU node and a DU node. The RAN device including the CU node and the DU node splits protocol layers of an eNB in a long term evolution (long term evolution, LTE) system. Functions of some protocol layers are centrally controlled by the CU, functions of some or all of the remaining protocol layers are distributed in the DU, and the CU centrally controls the DU.

### 2. Extended reality (extended reality, XR) service

XR refers to various real-virtual combined environments generated by computing technologies and wearable devices, and human-machine interaction. For example, the XR includes the following typical forms: augmented reality (augmented reality, AR), mixed reality (mixed reality, MR), virtual reality (virtual reality, VR), cloud gaming (cloud gaming, CG), and the like. The XR is one of 5G multi-media applications that are mainly considered in the industry field. Currently, in a protocol, modeling and analysis are performed on XR service features. Usually, the XR service periodically generates a data frame at a specific frame rate.

The XR service may include a plurality of data flows simultaneously. For example, a same XR service (for example, a game service) may include a plurality of data flows such as video data, audio data, or gesture information. Based on the analysis and modeling on the XR service features in the existing protocol, features such as data arrival intervals and data amounts of the plurality of data flows of the XR service may be different. For example, a downlink virtual reality (downlink virtual reality, DL VR) service may include a video stream and an audio stream. Data of the video stream arrives at a frame rate of 60/120 frames per second (frames per second, fps), and a data frame is large. Data of the audio stream arrives at a periodicity of 10 milliseconds (ms), and a data frame is small.

### 3. Discontinuous reception (discontinuous reception, DRX)

In a new radio (new radio, NR) system, an access network device may configure DRX for a terminal device. The terminal device turns on a receiver and enters a DRX active state only at necessary time (for example, arrival time of a data flow), to monitor downlink control signaling, and turns off the receiver and enters a DRX sleep state in other time. This reduces energy consumption of the terminal device. Through the DRX, the terminal device does not need to monitor and parse a physical downlink control channel (physical downlink control channel, PDCCH) at any time to determine whether the access network device schedules a transmission resource for the terminal device.

For example, in NR DRX, the access network device may configure, for the terminal device, DRX parameters, including but not limited to the following:
(1) DRX cycle (DRX cycle): In each DRX cycle, the terminal device wakes up for a period of time (in other words, enters the DRX active state) to monitor the PDCCH. The DRX cycle includes a long cycle and a short cycle, where the long cycle is an integer multiple of the short cycle.
(2) DRX on-duration timer (drx-onDurationTimer): The DRX on-duration timer indicates duration in which the terminal device is in the active state. For example, a value of drx-onDurationTimer is continuous downlink duration. In this period of time, the terminal device needs to monitor the PDCCH, in other words, the terminal device is in the active state in this period of time. A start moment of drx-onDurationTimer is determined based on the DRX cycle and a DRX start offset (indicating a start subframe of the DRX cycle). For example, drx-onDurationTimer is started at a moment at which a start position of each DRX cycle is offset backward by drx-SlotOffset.
(3) DRX inactivity timer (drx-InactivityTimer): The DRX inactivity timer indicates duration in which the terminal device monitors, after receiving a PDCCH for initial transmission, the PDCCH. For example, a value of drx-InactivityTimer is continuous downlink duration. In this period of time, the terminal device needs to monitor the PDCCH. drx-InactivityTimer is started or restarted when the terminal device receives a PDCCH indicating initial transmission (indicating uplink or downlink initial transmission scheduling).
(4) DRX hybrid automatic repeat request round trip time timer (drx-HARQ-RTT-Timer): The DRX hybrid automatic repeat request round trip time timer indicates a minimum quantity of interval symbols between next retransmission and current transmission, and may alternatively be referred to as a minimum retransmission scheduling interval. For example, drx-HARQ-RTT-Timer may include uplink and downlink drx-HARQ-RTT-Timers, that is, drx-HARQ-RTT-TimerUL and drx-HARQ-RTT-TimerDL. drx-HARQ-RTT-TimerDL is started at a 1^{st} symbol after end of HARQ feedback for downlink transmission of a hybrid automatic repeat request (hybrid automatic repeat request, HARQ) process. drx-HARQ-RTT-TimerUL is started at a 1^{st} symbol after end of uplink transmission of the HARQ process. Optionally, if the uplink transmission is repetition transmission (repetition transmission), drx-HARQ-RTT-TimerUL is started at a 1^{st} symbol after end of 1^{st} repetition.
(5) DRX retransmission timer (drx-RetransmissionTimer): The DRX retransmission timer indicates maximum duration for which the terminal device waits until data retransmission when the terminal device is in the active state, that is, a waiting period of time for receiving scheduling for retransmission. For example, drx-RetransmissionTimer may include uplink and downlink drx-RetransmissionTimers, that is, drx-RetransmissionTimerUL and drx-RetransmissionTimerDL. When drx-HARQ-RTT-TimerDL of a HARQ process expires and a downlink transport block (transport block, TB) is not successfully decoded, drx-RetransmissionTimerDL is started at a 1^{st} symbol after a round trip time (round trip time, RTT) timer expires. drx-RetransmissionTimerUL is started at a 1^{st} symbol after drx-HARQ-RTT-TimerUL of a HARQ process expires.
(6) DRX start offset (drx-StartOffset): The DRX start offset indicates a start subframe of the DRX cycle. For example, drx-onDurationTimer is started at a moment at which a start position of each DRX cycle is offset backward by drx-SlotOffset.
(7) DRX slot offset (drx-SlotOffset): The DRX slot offset indicates duration by which starting of the DRX on-duration timer is delayed backward from a front boundary of the start subframe of the DRX cycle.
(8) Short cycle timer (drx-shortCycleTimer): The short cycle timer indicates lifetime of the short cycle. When drx-shortCycleTimer expires, the long DRX cycle needs to be used. For example, when the short DRX cycle is configured, drx-shortCycleTimer is started or restarted in the following two cases: drx-InactivityTimer expiring, or the terminal device receiving a DRX command media access control control element (DRX command media access control control element, DRX command MAC CE). The DRX command MAC CE is a MAC CE that enables the terminal device to immediately enter a sleep period. After receiving the DRX command MAC CE, the terminal device immediately stops drx-onDurationTimer and drx-InactivityTimer.

Optionally, the terminal device may maintain the foregoing DRX cycle states and various timers according to the following rules.

Rule 1: The DRX cycle, drx-onDurationTimer, drx-InactivityTimer, and drx-shortCycleTimer are maintained via each MAC entity (entity), in other words, one MAC entity of the UE maintains only one set of DRX cycle states, onDurationTimer, InactivityTimer, and the like.

Rule 2: drx-HARQ-RTT-Timer and drx-RetransmissionTimer are maintained by using each HARQ process, in other words, for each HARQ process, drx-HARQ-RTT-Timer and drx-Retransmission-Timer that are associated with the HARQ process may be started/restarted based on a condition.

Optionally, on an NR Uu interface, it is defined in a protocol that, after the DRX cycle is configured, the terminal device being in the DRX active state may be determined according to the following rules.

Rule 1: One or more of drx-onDurationTimer, drx-InactivityTimer, drx-RetransmissionTimerDL, or drx-RetransmissionTimerUL are in a running state.

Rule 2: A contention resolution timer (ra-ContentionResolutionTimer) for receiving a message Msg4 is in a running state in a random access process.

Rule 3: The terminal device sends a scheduling request (scheduling request, SR) on a physical uplink control channel (physical uplink control channel, PUCCH), but the triggered SR is still in a suspended state.

Rule 4: In a collision-free random access process, the terminal device successfully receives a random access response (random access response, RAR), but receives no initial transmission scheduled by using a PDCCH scrambled by a cell radio network temporary identifier (cell radio network temporary identifier, C-RNTI).

A case in which a DRX parameter using an existing configuration is applied to an XR service having multi-flow data is described below by using an example. The XR service usually has a high requirement on a delay. When the terminal device performs the XR service having multi-flow data, arrival time of a plurality of data flows may be mutually staggered. However, currently, the terminal device can configure only one set of common DRX parameters for the plurality of data flows. As a result, the DRX parameter may not match features of some data flows, and consequently, an extra waiting delay is caused. For example, FIG. 2 is a diagram of arrival time of multi-flow data. If drx-onDurationTimer is configured based on an arrival periodicity of a video stream, data of an audio stream may be delayed by a maximum of 13.33 milliseconds (ms), as shown in extra delay_1 in FIG. 2. On the contrary, if drx-onDurationTimer is configured based on an arrival periodicity of the audio stream, data of the video stream may be delayed by a maximum of 6.67 ms, as shown in extra delay_2 in FIG. 2. In addition, a packet delay budget (packet delay budget, PDB) of a data packet of the video stream may be only 10 ms. In this case, the data of the video stream is very likely to expire, and consequently, a network capacity is reduced.

In addition, values of drx-onDurationTimer, drx-InactivityTimer, and the like are related to a data amount. Because average data packet sizes of different data flows may be greatly different, when only one set of common DRX parameters is configured currently, for a data flow with a small data amount, a timer may be excessively long. As a result, the terminal device is still in a monitoring state when no data transmission is performed, and an energy saving effect is reduced.

### 4. Secondary DRX group (secondary DRX group)

A concept of the secondary DRX group is introduced in a current protocol. For a terminal device that supports this function, serving cells of a MAC entity may be divided into two DRX groups (for example, referred to as a first DRX group and a second DRX group). A cell in the second DRX group may use drx-onDurationTimer and drx-InactivityTimer that are different from those of a cell in the first DRX group, and another DRX parameter of the cell in the second DRX group is the same as that of the cell in the first DRX group. For example, an access network device configures, by using a secondary cell configuration (ScellConfig) information element in a radio resource control (radio resource control, RRC) message, that a specified cell belongs to the secondary DRX group, and a DRX parameter of the first DRX group and a DRX parameter of the second DRX group are respectively configured by using a DRX configuration (DRX-Config) information element and a DRX configuration secondary group (DRX-ConfigsecondaryGroup) information element. Optionally, the cell in the first DRX group and the cell in the second DRX group are in different frequency ranges, and a plurality of cells in a same DRX group are in a same frequency range.

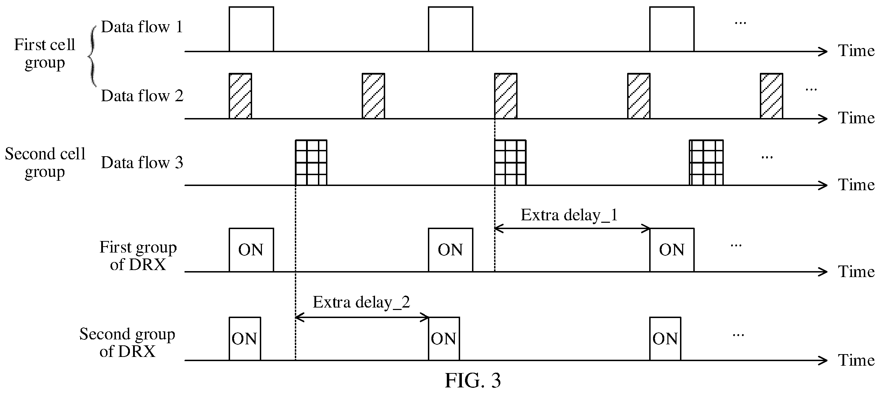

A case in which a secondary DRX group using an existing configuration is applied to an XR service having multi-cell group multi-flow data is described below by using an example. Currently, although two groups of DRX parameters may be configured, parameters such as DRX cycles in the two groups of DRX parameters are the same, and only drx-onDurationTimers and drx-InactivityTimers in the two groups of DRX parameters are different. Therefore, a problem that data arrival time intervals of different data flows are different still cannot be resolved. For example, FIG. 3 is a diagram of arrival time of multi-flow data of a multi-cell group. As shown in FIG. 3, although two groups of DRX parameters (a first group of DRX parameters (first DRX) and a second group of DRX parameters (second DRX)) are configured, DRX cycles of the first DRX and the second DRX are the same. If a DRX cycle is determined based on a data arrival periodicity of a data flow 1 (flow 1) of a first cell group (first cell group), data of a data flow 2 (flow 2) may be delayed by a maximum of extra delay_1, and data of a data flow 3 (flow 3) may be delayed by a maximum of extra delay _2, as shown in FIG. 3. In addition, different DRX configurations can take effect only on serving cell groups in different frequency ranges. For different data flows in a same serving cell group, a problem that data arrival time intervals of different data flows are different still cannot be resolved.

### II. Network configuration method in this application

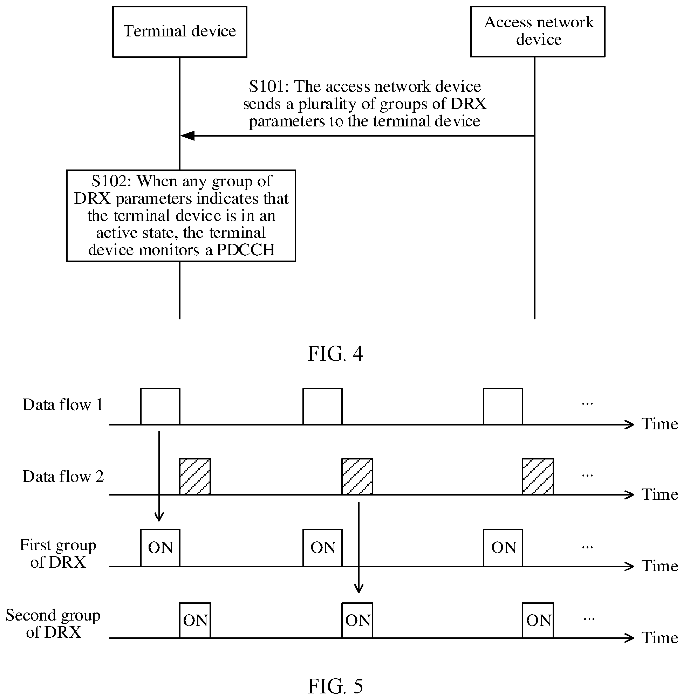

FIG. 4 is a schematic flowchart of a network configuration method according to this application. The network configuration method is applied to the communication system shown in FIG. 1, and is applied to a service scenario including multi-flow data. For example, the network configuration method may be implemented through interaction between an access network device and a terminal device, and the method includes the following steps.

S101: The access network device sends a plurality of groups of DRX parameters to the terminal device. Correspondingly, the terminal device receives the plurality of groups of DRX parameters.

The access network device may configure the plurality of groups of DRX parameters for the terminal device by using RRC signaling. For example, the access network device sends the RRC signaling to the terminal device. The RRC signaling includes a plurality of DRX configuration information elements. One DRX configuration information element corresponds to one group of DRX parameters. Correspondingly, the terminal device receives the RRC signaling, and obtains the plurality of groups of DRX parameters included in the RRC signaling. Optionally, the access network device may further configure the plurality of groups of DRX parameters for the terminal device by using other signaling. This is not limited in this embodiment.

Optionally, the RRC signaling may include a list of DRX configuration information elements. For example, the list of DRX configuration information elements is referred to as drxConfigList, where drxConfigList includes a plurality of DRX configuration information elements, each DRX configuration information element includes a DRX index, and the DRX index is used to associate a corresponding DRX parameter. For example, Table 1 is a list of DRX configuration information elements provided in this application. The list includes DRX indices, DRX configuration information elements, and DRX parameters.

**Table 1: List of DRX configuration information elements**

| | |
|---|---|
| DRX configuration information element 1 | DRX index 1 |
| | First group of DRX parameters |
| DRX configuration information element 2 | DRX index 2 |
| | Second group of DRX parameters |
| DRX configuration information element 3 | DRX index 3 |
| | Third group of DRX parameters |
| ... | ... |

In this embodiment, any group of DRX parameters in the plurality of groups of DRX parameters may include but is not limited to the following parameters described in Section 3: a DRX cycle (DRX cycle), a DRX on-duration timer (drx-onDurationTimer), a DRX inactivity timer (drx-InactivityTimer), a DRX hybrid automatic repeat request round trip time timer (drx-HARQ-RTT-Timer), a DRX retransmission timer (drx-RetransmissionTimer), a DRX start offset (drx-StartOffset), a DRX slot offset (drx-SlotOffset), and the like. For definitions of the foregoing parameters, refer to corresponding descriptions in Section 3. Details are not described herein again.

Optionally, any group of DRX parameters received by the terminal device may include all of the foregoing parameters, or may include only some of the parameters. For example, the any group of DRX parameters received by the terminal device includes only one or more of the DRX cycle, drx-onDurationTimer, and drx-InactivityTimer. For another example, in addition to including only one or more of the DRX cycle, drx-onDurationTimer, and drx-InactivityTimer, the any group of DRX parameters received by the terminal device further includes one or more of drx-HARQ-RTT-Timer, drx-RetransmissionTimer, drx-StartOffset, drx-SlotOffset, and drx-ShortCycleTimer.

Optionally, when any DRX configuration information element does not include all parameters in a corresponding group of DRX parameters, a value of a parameter that is not included is a default value, and the default value is a parameter value configured by the access network device according to a protocol. For example, when the DRX configuration information element includes only some of the parameters, for a parameter that is not included in the DRX configuration information element (for example, it is assumed that drx-HARQ-RTT-Timer is not included in the DRX configuration information element), a value of the parameter may be considered to be the same as a value of a DRX parameter configured in an existing protocol (for example, a value of drx-HARQ-RTT-Timer in the DRX parameter configured in the existing protocol).

The any group of DRX parameters in the plurality of groups of DRX parameters includes the DRX cycle, and the DRX cycle is determined based on a data arrival periodicity of a data flow corresponding to the group of DRX parameters or a transmission periodicity of data on a carrier corresponding to the group of DRX parameters. The following describes in detail configuration of the plurality of groups of DRX parameters in two implementations.

### 1. Implementation 1: The DRX parameter is related to the data arrival periodicity of the corresponding data flow.

The access network device may specify an associated data radio bearer (data radio bearer, DRB) or a logical channel (logical channel, LCH) for each of the plurality of groups of DRX parameters by using the RRC signaling, so that an association relationship is established between the DRX parameter and the data flow. Correspondingly, the terminal device receives the RRC signaling, where the RRC signaling includes DRBs or LCHs respectively associated with the plurality of groups of DRX parameters. The data flow is associated with the DRB, the LCH, or a logical channel group (logical channel group, LCG). For example, the data flow is mapped to the DRB, the data flow is carried on the LCH, one DRB is associated with one LCH, and a plurality of LCHs form one LCG.

Specifically, the RRC signaling including the DRBs or LCHs respectively associated with the plurality of groups of DRX parameters may include but is not limited to the following cases.

Case 1: Any DRX configuration information element in the RRC signaling carries a corresponding DRB identifier (identity, ID), a corresponding LCH identifier, or a corresponding LCG identifier. For example, the DRX configuration information element may carry one or more DRB IDs, one or more LCH IDs, or one or more LCG IDs, to establish an association relationship between the DRX parameter and the DRB, the LCH, or the LCG.

Case 2: Any DRB configuration information element in the RRC signaling carries a corresponding DRX index. For example, the DRX index may be added to the existing DRB configuration information element, to establish an association relationship between the DRB and the DRX parameter.

Case 3: Any LCH configuration information element in the RRC signaling carries a corresponding DRX index. For example, the DRX index may be added to the existing LCH configuration information element, to establish an association relationship between the LCH and the DRX parameter.

The following describes the configuration of the plurality of groups of DRX parameters in Implementation 1.

### (1) DRX cycle, drx-onDurationTimer, drx-StartOffset, and drx-SlotOffset

In Implementation 1, the DRX cycle is determined based on the data arrival periodicity of the data flow corresponding to the DRX parameter. For example, FIG. 5 is a diagram of multi-flow data and a plurality of corresponding groups of DRX cycles according to this application. A DRC cycle in a first group of DRX parameters is the same as a data arrival periodicity of a flow 1, and a DRC cycle in a second group of DRX parameters is the same as a data arrival periodicity of a flow 2. In this case, when a data arrival periodicity of a data flow received by the terminal device is the same as the data arrival periodicity of the flow 1 or is an integer multiple of the data arrival periodicity of the flow 1, the terminal device may configure a value of the DRX cycle as that of the DRX cycle in the first group of DRX parameters. When a data arrival periodicity of a data flow received by the terminal device is the same as the data arrival periodicity of the flow 2 or is an integer multiple of the data arrival periodicity of the flow 2, the terminal device may configure a value of the DRX cycle as that of the DRX cycle in the second group of DRX parameters.

DRX cycles and/or DRX start offsets of any two groups of DRX parameters in the plurality of groups of DRX parameters are different. For example, it is assumed that the DRX cycles of the any two groups of DRX parameters in the plurality of groups of DRX parameters are different (as shown in FIG. 5). It indicates that the two groups of DRX parameters are applicable to data flows of different data arrival periodicities. In this way, an extra service delay is avoided. For another example, it is assumed that the DRX cycles of the any two groups of DRX parameters in the plurality of groups of DRX parameters are the same, but DRX drx-StartOffsets are different. Through configuration of the DRX drx-StartOffsets, the two groups of DRX parameters may also be applicable to data flows of different data arrival periodicities.

A start position of the DRX on-duration timer in any group of DRX parameters is configured based on the DRX cycle, the DRX start offset, and the DRX slot offset in the group of DRX parameters. For example, for drx-onDurationTimer, starting and stopping are periodical, and positions are determined by DRX cycle, drx-StartOffset, and drx-SlotOffset. When the plurality of groups of DRX parameters are configured, positions of a plurality of drx-onDurationTimers are separately calculated according to a current rule.

### (2) drx-InactivityTimer

drx-InactivityTimer can be configured in the following manners.

Manner 1: drx-InactivityTimer is configured based on a first preset parameter, where the first preset parameter indicates a value of the DRX inactivity timer.

The access network device may send the first preset parameter to the terminal device. Correspondingly, the terminal device receives the first preset parameter, and configures drx-InactivityTimer based on the first preset parameter. For example, the access network device sends the RRC signaling to the terminal device, where a DRX configuration information element in the RRC signaling includes the first preset parameter. Alternatively, a cell configuration information element in the RRC signaling carries a DRX index, and the DRX index is used to associate a corresponding DRX configuration information element, so that the terminal device can obtain the first preset parameter included in the DRX configuration information element. Further, when a PDCCH indicating initial transmission is received, the terminal device starts or restarts drx-InactivityTimer specified in the RRC signaling (in other words, drx-InactivityTimer configured based on the first preset parameter).

Optionally, the first preset parameter may alternatively be a value of drx-InactivityTimer defined in a protocol. For example, a group of DRX parameters is defined in the protocol, including the value of drx-InactivityTimer. In this case, the terminal device may configure drx-InactivityTimer based on the value of drx-InactivityTimer defined in the protocol. Further, when a PDCCH indicating initial transmission is received, the terminal device starts or restarts drx-InactivityTimer specified in the RRC signaling (in other words, drx-InactivityTimer configured according to the protocol).

Manner 2: When initial transmission occurs, corresponding drx-InactivityTimer is selected based on a source of the data flow.

Specifically, the initial transmission may include uplink initial transmission or downlink initial transmission. For the uplink initial transmission, the terminal device may perform the following operations:
when a PDCCH indicating the uplink initial transmission is received, determining an LCH that is for data transmission on a PUSCH corresponding to the PDCCH; and
starting or restarting a DRX inactivity timer configured based on a DRX parameter associated with the LCH, or starting or restarting a DRX inactivity timer configured based on a DRX parameter associated with a DRB corresponding to the LCH, or starting or restarting a DRX inactivity timer configured based on a DRX parameter associated with an LCG to which the LCH belongs.

For example, when the terminal device receives the PDCCH indicating the uplink initial transmission, a MAC entity obtains buffered data from the LCH, and generates a MAC protocol data unit (MAC protocol data unit, MAC PDU) for PUSCH transmission. In other words, the LCH is the LCH that is for data transmission on the PUSCH corresponding to the PDCCH. The MAC PDU may include data from different LCHs. In this case, the LCH is an LCH with a highest priority in a plurality of LCHs. Then, the terminal device starts or restarts drx-InactivityTimer configured based on the DRX parameter associated with the LCH, or starts or restarts drx-InactivityTimer configured based on the DRX parameter associated with the DRB corresponding to the LCH, or starts or restarts drx-InactivityTimer configured based on the DRX parameter associated with the LCG to which the LCH belongs.

For the downlink initial transmission, the terminal device may perform the following operations:
when a PDCCH indicating the downlink initial transmission is received, decoding data transmitted on a physical downlink shared channel PDSCH corresponding to the PDCCH, and determining an LCH for buffering the data; and
starting or restarting a DRX inactivity timer configured based on a DRX parameter associated with the LCH, or starting or restarting a DRX inactivity timer configured based on a DRX parameter associated with a DRB corresponding to the LCH, or starting or restarting a DRX inactivity timer configured based on a DRX parameter associated with an LCG to which the LCH belongs.

For example, when the terminal device receives the PDCCH indicating the downlink initial transmission, a MAC entity decodes TB data received on the PDSCH corresponding to the PDCCH, to obtain the LCH from which the data is. In other words, the LCH is the LCH that is for data transmission on the PUSCH corresponding to the PDCCH. The TB data may alternatively be from a plurality of different LCHs. In this case, the LCH is an LCH with a highest priority in the plurality of LCHs. Then, the terminal device starts or restarts drx-InactivityTimer configured based on the DRX parameter associated with the LCH, or starts or restarts drx-InactivityTimer configured based on the DRX parameter associated with the DRB corresponding to the LCH, or starts or restarts drx-InactivityTimer configured based on the DRX parameter associated with the LCG to which the LCH belongs.

Manner 3: When initial transmission occurs, corresponding drx-InactivityTimer is selected based on a possible source of the data flow.

When the terminal device cannot determine a source of the data flow, for uplink initial transmission, the terminal device may perform the following operations:
when a PDCCH indicating the uplink initial transmission is received, determining a corresponding LCH according to a logical channel priority (logical channel prioritization, LCP) rule; and
starting or restarting a DRX inactivity timer configured based on a DRX parameter associated with the LCH, or starting or restarting a DRX inactivity timer configured based on a DRX parameter associated with a DRB corresponding to the LCH, or starting or restarting a DRX inactivity timer configured based on a DRX parameter associated with an LCG to which the LCH belongs.

For example, when the PDCCH indicating the uplink initial transmission is received, a MAC entity first determines, according to the LCP rule, an LCH that can carry the data flow this time. The LCP rule is used for division into different LCHs. Reliability of data on different LCHs is different, and different requirements for resources for transmission are imposed. For example, a plurality of possible LCHs may be determined according to the LCP rule. In this case, the LCH that can carry the data flow this time is an LCH with a highest priority in the plurality of LCHs. Then, the terminal device starts or restarts drx-InactivityTimer configured based on the DRX parameter associated with the LCH, or starts or restarts drx-InactivityTimer configured based on the DRX parameter associated with the DRB corresponding to the LCH, or starts or restarts drx-InactivityTimer configured based on the DRX parameter associated with the LCG to which the LCH belongs.

Because there is no LCP rule in downlink, a possible data source cannot be determined. Therefore, for downlink initial transmission, the terminal device still performs the operations performed for the downlink initial transmission described in Manner 2. Optionally, for the downlink initial transmission, the terminal device may alternatively configure drx-InactivityTimer based on a value of drx-InactivityTimer defined in a protocol.

### (3) drx-HARQ-RTT-Timer and drx-RetransmissionTimer

drx-HARQ-RTT-Timer and drx-RetransmissionTimer may be configured in the following manners.

Manner 1: drx-HARQ-RTT-Timer and drx-RetransmissionTimer are configured based on a second preset parameter, where the second preset parameter indicates values of the DRX hybrid automatic repeat request round trip time timer and the DRX retransmission timer.

The access network device may send the second preset parameter to the terminal device. Correspondingly, the terminal device receives the second preset parameter, and configures drx-HARQ-RTT-Timer and drx-RetransmissionTimer based on the second preset parameter. For example, the access network device sends the RRC signaling to the terminal device, where a DRX configuration information element in the RRC signaling includes the second preset parameter. Alternatively, a cell configuration information element in the RRC signaling carries a DRX index, and the DRX index is used to associate a corresponding DRX configuration information element, so that the terminal device can obtain the second preset parameter included in the DRX configuration information element. drx-HARQ-RTT-Timer includes uplink drx-HARQ-RTT-Timer (drx-HARQ-RTT-TimerUL) and downlink drx-HARQ-RTT-Timer (drx-HARQ-RTT-TimerDL). drx-RetransmissionTimer also includes uplink drx-RetransmissionTimer (drx-RetransmissionTimerUL) and downlink drx-RetransmissionTimer (drx-RetransmissionTimerDL). In this case, that drx-HARQ-RTT-Timer and drx-RetransmissionTimer are configured based on the second preset parameter in Manner 1 specifically includes two cases: uplink and downlink cases.

Case 1: For the uplink case, when a PUSCH is sent, the terminal device starts or restarts drx-HARQ-RTT-TimerUL specified in the RRC signaling (in other words, drx-HARQ-RTT-TimerUL configured based on the second preset parameter). Further, when drx-HARQ-RTT-TimerUL expires, corresponding drx-RetransmissionTimerUL is started.

Case 2: For the downlink case, when a PDSCH is received and a corresponding HARQ feedback is sent, the terminal device starts or restarts drx-HARQ-RTT-TimerDL specified in the RRC signaling (in other words, drx-HARQ-RTT-TimerDL configured based on the second preset parameter). Further, when drx-HARQ-RTT-TimerDL expires, corresponding drx-RetransmissionTimerDL is started.

Manner 2: Corresponding drx-HARQ-RTT-Timer is selected based on a source of the data flow.

In Manner 2, that corresponding drx-HARQ-RTT-Timer is selected based on the source of the data flow also includes two cases: uplink and downlink cases.

Case 1: For uplink transmission, the terminal device may perform the following operations:
when a PUSCH is sent, determining an LCH that is for data transmission on the PUSCH;
starting or restarting an uplink DRX hybrid automatic repeat request round trip time timer configured based on a DRX parameter associated with the LCH, or starting or restarting an uplink DRX hybrid automatic repeat request round trip time timer configured based on a DRX parameter associated with a DRB corresponding to the LCH, or starting or restarting an uplink DRX hybrid automatic repeat request round trip time timer configured based on a DRX parameter associated with an LCG to which the LCH belongs; and
when the uplink DRX hybrid automatic repeat request round trip time timer expires, starting a corresponding uplink DRX retransmission timer.

For example, if data of a MAC PDU transmitted this time is from an LCH, it is determined that the LCH is the LCH that is for data transmission on the PUSCH. The MAC PDU may include data from a plurality of LCHs. In this case, the LCH is an LCH with a highest priority in the plurality of LCHs. When the PUSCH is sent (if there is repetition bundle, first transmission is considered), drx-HARQ-RTT-TimerUL configured based on the DRX parameter associated with the LCH is started or restarted, or drx-HARQ-RTT-TimerUL configured based on the DRX parameter associated with the DRB corresponding to the LCH is started or restarted, or drx-HARQ-RTT-TimerUL configured based on the DRX parameter associated with the LCG to which the LCH belongs is started or restarted. When drx-HARQ-RTT-TimerUL expires, corresponding drx-RetransmissionTimerUL is started.

Case 2: For downlink transmission, the terminal device may perform the following operations:
when a PDSCH is received, decoding data on the PDSCH, and determining an LCH for buffering the data;
when a HARQ feedback of the PDSCH is sent, starting or restarting a downlink DRX hybrid automatic repeat request round trip time timer configured based on a DRX parameter associated with the LCH, or starting or restarting a downlink DRX hybrid automatic repeat request round trip time timer configured based on a DRX parameter associated with a DRB corresponding to the LCH, or starting or restarting a downlink DRX hybrid automatic repeat request round trip time timer configured based on a DRX parameter associated with an LCG to which the LCH belongs; and
when the downlink DRX hybrid automatic repeat request round trip time timer expires, starting a corresponding downlink DRX retransmission timer.

For example, when the terminal device receives the PDSCH, a MAC entity decodes TB data received on the PDSCH, to obtain an LCH from which the data is. In other words, the LCH is the LCH for buffering data transmitted on the PDSCH. The TB data may alternatively be from a plurality of different LCHs. In this case, the LCH is an LCH with a highest priority in the plurality of LCHs. Then, the terminal device starts or restarts drx-HARQ-RTT-TimerDL configured based on the DRX parameter associated with the LCH, or starts or restarts drx-HARQ-RTT-TimerDL configured based on the DRX parameter associated with the DRB corresponding to the LCH, or starts or restarts drx-HARQ-RTT-TimerDL configured based on the DRX parameter associated with the LCG to which the LCH belongs.

### 2. Implementation 2: The DRX parameter is related to the transmission periodicity of data on the corresponding carrier.

The access network device may specify an associated cell (cell) or a bandwidth part (bandwidth part, BWP) for each of the plurality of groups of DRX parameters by using the RRC signaling, so that an association relationship is established between the DRX parameter and the carrier. Correspondingly, the terminal device receives the RRC signaling, where the RRC signaling includes carriers respectively associated with the plurality of groups of DRX parameters. The carrier is associated with the cell or the BWP. For example, the carrier belongs to the cell and is a carrier of a cell service; and the BWP is a segment of bandwidth configured in the cell. In other words, the RRC signaling includes cells or BWPs respectively associated with the plurality of groups of DRX parameters.

Specifically, the RRC signaling including the cells or bandwidth parts BWPs respectively associated with the plurality of groups of DRX parameters may include but is not limited to the following cases.

Case 1: Any DRX configuration information element in the RRC signaling carries a corresponding cell identifier, a corresponding cell group identifier, or a corresponding BWP identifier. For example, the DRX configuration information element may carry one or more cell IDs, one or more cell group IDs, or one or more BWP IDs, to establish an association relationship between the DRX parameter and the cell, the cell group, or the bandwidth part BWP.

Case 2: Any cell configuration information element in the RRC signaling carries a corresponding DRX index. For example, the DRX index may be added to the existing cell configuration information element, to establish an association relationship between the cell and the DRX parameter.

Case 3: Any cell group configuration information element in the RRC signaling carries a corresponding DRX index. For example, the DRX index may be added to the existing cell group configuration information element, to establish an association relationship between the cell group and the DRX parameter.

Case 4: Any BWP configuration information element in the RRC signaling carries a corresponding DRX index. For example, the DRX index may be added to the existing BWP configuration information element, to establish an association relationship between the BWP and the DRX parameter.

The following describes configuration of the plurality of groups of DRX parameters in Implementation 2.

### (1) DRX cycle, drx-onDurationTimer, drx-StartOffset, and drx-SlotOffset

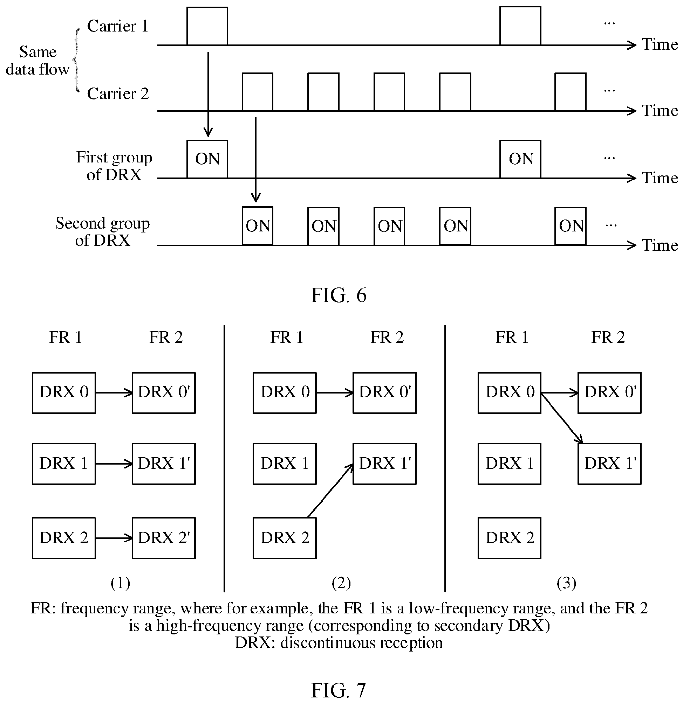

In Implementation 2, the DRX cycle is determined based on the transmission periodicity of the data on the carrier corresponding to the DRX parameter. For example, FIG. 6 is a diagram of multi-carrier and a plurality of corresponding groups of DRX cycles according to this application. A same data flow is distributed to different carriers according to a specific rule. For example, transmission of I-frame data in a video stream is performed on a carrier 1 (carrier 1), and transmission of P-frame data is performed on a carrier 2 (carrier 2), as shown in FIG. 6. In this case, a DRC cycle in a first group of DRX parameters may be configured to be the same as a transmission periodicity of the data on the carrier 1, and a DRC cycle in a second group of DRX parameters may be configured to be the same as a transmission periodicity of the data on the carrier 2.

DRX cycles and/or DRX start offsets of any two groups of DRX parameters in the plurality of groups of DRX parameters are different. A start position of a DRX on-duration timer in any group of DRX parameters is configured based on a DRX cycle, a DRX start offset, and a DRX slot offset in the group of DRX parameters. For a specific configuration manner, refer to corresponding descriptions in Implementation 1. Details are not described herein again.

### (2) drx-InactivityTimer

When a PDCCH indicating initial transmission is received on a first carrier, the terminal device may start or restart a DRX inactivity timer corresponding to the first carrier. In other words, a value of drx-InactivityTimer is directly determined based on the first carrier.

### (3) drx-HARQ-RTT-Timer and drx-RetransmissionTimer

When data transmission is performed on a first carrier, the terminal device may start or restart a DRX hybrid automatic repeat request round trip time timer corresponding to the first carrier; and when the DRX hybrid automatic repeat request round trip time timer expires, the terminal device starts a corresponding DRX retransmission timer.

For example, when uplink transmission is performed on the first carrier, drx-HARQ-RTT-TimerUL corresponding to the first carrier is started or restarted, and after drx-HARQ-RTT-TimerUL expires, corresponding drx-RetransmissionTimerUL is started. For another example, when downlink transmission is performed on the first carrier, drx-HARQ-RTT-TimerDL corresponding to the first carrier is started or restarted, and after drx-HARQ-RTT-TimerDL expires, corresponding drx-RetransmissionTimerDL is started.

S102: When the any group of DRX parameters indicates that the terminal device is in an active state, the terminal device monitors the PDCCH.

For example, when drx-onDurationTimer, drx-InactivityTimer, or drx-RetransmissionTimer in any set of DRX parameters is in a running state, it indicates that the UE is in the active state, and in this case, the UE monitors the PDCCH. For another example, when drx-onDurationTimer, drx-InactivityTimer, or drx-RetransmissionTimer in any set of DRX is in a running state, the UE monitors the PDCCH for the first carrier.

It can be learned that, in the network configuration method provided in this embodiment, the plurality of groups of DRX parameters may be configured for different data flows, and a related parameter such as a DRX cycle in each group of DRX parameters is configured differently, so that DRX configurations can better match features, such as data arrival time and data amount, of different data flows. In this way, a terminal device can wake up in time when data arrives, and monitors the PDCCH for a proper period of time, to ensure a service delay and user experience. In addition, monitoring time is not longer than time needed for the data amount, helping reduce energy consumption of the terminal device.

Optionally, in this application, when the plurality of groups of DRX parameters are configured, corresponding secondary (secondary) DRX parameters may be further respectively configured for the plurality of groups of DRX parameters, so that DRX parameters of different data flows better match transmission rhythms of the data flows in a low-frequency serving cell and a high-frequency serving cell. This helps reduce energy consumption of the terminal device.

In a possible implementation, the access network device may configure a plurality of groups of secondary DRX parameters for the terminal device by using RRC signaling. For example, the access network device sends the RRC signaling to the terminal device, where the RRC signaling includes a plurality of groups of secondary DRX parameters corresponding to the plurality of groups of DRX parameters, and one group of secondary DRX parameters includes a DRX on-duration timer and a DRX inactivity timer.

When there are a plurality of groups of DRX parameters, the secondary DRX parameters may be configured in the following manners.

Manner 1: One corresponding group of secondary DRX parameters is configured for each group of DRX parameters.

For example, the plurality of groups of secondary DRX parameters are in one-to-one correspondence with a plurality of configured groups of DRX parameters, in other words, each group of DRX parameters is associated with one group of secondary DRX parameters. For example, FIG. 7 is a diagram of correspondences between a plurality of groups of DRX parameters and secondary DRX parameters according to this application; (1) in FIG. 7 shows a one-to-one correspondence, to be specific, secondary DRX corresponding to DRX 0 is DRX 0', secondary DRX corresponding to DRX 1 is DRX 1', and secondary DRX corresponding to DRX 2 is DRX 2'. Specifically, the secondary DRX may be directly configured in a DRX configuration information element. If the secondary DRX is not configured in the DRX configuration information element, the group of DRX parameters has no corresponding secondary DRX parameter.

Manner 2: A group of corresponding DRX parameters is specified for each group of secondary DRX parameters.

For example, when a secondary DRX parameter is configured, a group of DRX parameters is specified for the secondary DRX parameter, and the remaining of the secondary DRX parameters reuses the remaining of the specified DRX parameters. For example, (2) in FIG. 7 shows a specified relationship. It is assumed that a specified DRX parameter is DRX 0 when secondary DRX 0' is configured, and a specified DRX parameter is DRX 2 when secondary DRX 1' is configured. In this case, the terminal device may configure DRX 0' and DRX 1' based on the specified relationship. Specifically, a DRX index may be carried in a secondary DRX configuration information element, to indicate the specified DRX parameter.

Manner 3: The plurality of groups of secondary DRX parameters are configured based on one group of specified DRX parameters.

For example, if the access network device specifies a set of default (default) DRX parameters for the terminal device by using the RRC signaling, the plurality of groups of secondary DRX parameters are configured based on the default DRX parameter. For example, (3) in FIG. 7 shows a one-to-many relationship. It is assumed that specified default DRX is DRX 0. When the secondary DRX parameters (for example, DRX 0' and DRX 1') are configured, the parameters are configured based on a parameter of DRX 0. Specifically, a default identifier may be carried in a DRX configuration information element, to indicate that all the secondary DRX parameters are configured based on the default DRX parameter.

Optionally, the secondary DRX and the DRX corresponding to the secondary DRX have a same effective range. For example, a group of DRX parameters and a corresponding group of secondary DRX parameters take effect on a same DRB.

To implement the functions in the method provided in this application, an apparatus or a device provided in this application may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions. Division into modules in this application is an example, and is merely logical function division. During actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

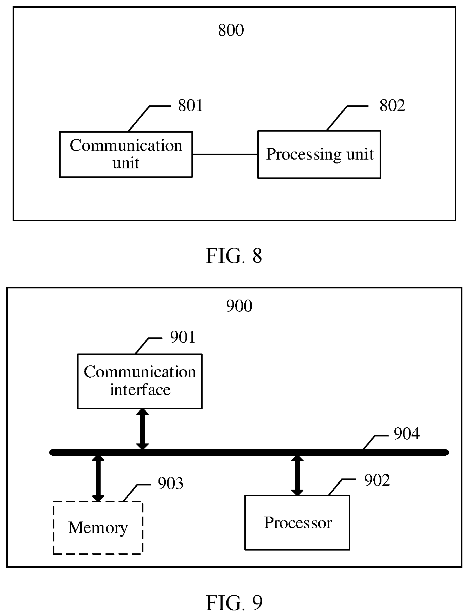

FIG. 8 is a diagram of a communication apparatus according to this application. The communication apparatus may include a one-to-one corresponding module for performing the method/operation/step/action described in the method embodiment corresponding to FIG. 4. The module may be implemented by a hardware circuit, software, or a combination of a hardware circuit and software.

The communication apparatus 800 includes a communication unit 801 and a processing unit 802, configured to implement the method performed by the terminal device or the access network device in the foregoing embodiment.

In a possible implementation, the communication unit 801 is configured to receive a plurality of groups of discontinuous reception DRX parameters, where any group of DRX parameters in the plurality of groups of DRX parameters includes a DRX cycle, and the DRX cycle is determined based on a data arrival periodicity of a data flow corresponding to the group of DRX parameters or a transmission periodicity of data on a carrier corresponding to the group of DRX parameters. The processing unit 802 is configured to: when the any group of DRX parameters indicates that a terminal device is in an active state, monitor a physical downlink control channel PDCCH.

Optionally, the terminal device receives radio resource control RRC signaling. The RRC signaling includes a plurality of DRX configuration information elements. One DRX configuration information element corresponds to one group of DRX parameters, the DRX configuration information element includes a DRX index, and the DRX index is used to associate a corresponding DXR parameter.

Optionally, the any group of DRX parameters in the plurality of groups of DRX parameters further includes one or more of the following parameters:
a DRX on-duration timer (drx-onDurationTimer), indicating duration in which the terminal device is in the active state;
a DRX inactivity timer (drx-InactivityTimer), indicating duration in which the terminal device monitors, after receiving a PDCCH for initial transmission, the PDCCH;
a DRX hybrid automatic repeat request round trip time timer (drx-HARQ-RTT-TimerUL/drx-HARQ-RTT-TimerDL), indicating a minimum quantity of interval symbols between next retransmission and current transmission;
a DRX retransmission timer (drx-RetransmissionTimerUL/drx-RetransmissionTimerDL), indicating maximum duration for which the terminal device waits until data retransmission when the terminal device is in the active state;
a DRX start offset (drx-SlotOffset), indicating a start subframe of the DRX cycle; and
a DRX slot offset (drx-StartOffset), indicating duration by which starting of the DRX on-duration timer is delayed backward from a front boundary of the start subframe of the DRX cycle.

Optionally, when any DRX configuration information element does not include all parameters in a corresponding group of DRX parameters, a value of a parameter that is not included is a default value, and the default value is a parameter value configured by the access network device according to a protocol.

Optionally, DRX cycles and/or DRX start offsets of any two groups of DRX parameters in the plurality of groups of DRX parameters are different. A start position of the DRX on-duration timer in the any group of DRX parameters is configured based on the DRX cycle, the DRX start offset, and the DRX slot offset in the group of DRX parameters.

Optionally, the RRC signaling further includes data radio bearers DRBs or logical channels LCHs respectively associated with the plurality of groups of DRX parameters. Any DRX configuration information element in the RRC signaling carries a corresponding DRB identifier, a corresponding LCH identifier, or a corresponding logical channel group LCG identifier; or any DRB configuration information element in the RRC signaling carries a corresponding DRX index; or any LCH configuration information element in the RRC signaling carries a corresponding DRX index.

Optionally, the communication unit 801 is configured to receive a first preset parameter, where the first preset parameter indicates a value of the DRX inactivity timer.

Optionally, the processing unit 802 is configured to:
when a PDCCH indicating initial transmission is received, start or restart a DRX inactivity timer configured based on the first preset parameter; or
when a PDCCH indicating initial transmission is received, start or restart a DRX inactivity timer configured according to a protocol.

Optionally, the processing unit 802 is configured to:
when a PDCCH indicating uplink initial transmission is received, determine an LCH that is for data transmission on a physical uplink shared channel PUSCH corresponding to the PDCCH; and
start or restart a DRX inactivity timer configured based on a DRX parameter associated with the LCH, or start or restart a DRX inactivity timer configured based on a DRX parameter associated with a DRB corresponding to the LCH, or start or restart a DRX inactivity timer configured based on a DRX parameter associated with an LCG to which the LCH belongs.

Optionally, the processing unit 802 is configured to:
when a PDCCH indicating downlink initial transmission is received, decode data transmitted on a physical downlink shared channel PDSCH corresponding to the PDCCH, and determine an LCH for buffering the data; and
start or restart a DRX inactivity timer configured based on a DRX parameter associated with the LCH, or start or restart a DRX inactivity timer configured based on a DRX parameter associated with a DRB corresponding to the LCH, or start or restart a DRX inactivity timer configured based on a DRX parameter associated with an LCG to which the LCH belongs.

Optionally, the processing unit 802 is configured to:
when a PDCCH indicating uplink initial transmission is received, determine a corresponding LCH according to a logical channel priority LCP rule; and
start or restart a DRX inactivity timer configured based on a DRX parameter associated with the LCH, or start or restart a DRX inactivity timer configured based on a DRX parameter associated with a DRB corresponding to the LCH, or start or restart a DRX inactivity timer configured based on a DRX parameter associated with an LCG to which the LCH belongs.

Optionally, the communication unit 801 is configured to receive a second preset parameter, where the second preset parameter indicates a value of the DRX hybrid automatic repeat request round trip time timer.

Optionally, the processing unit 802 is configured to:
when a physical uplink shared channel PUSCH is sent, start or restart an uplink DRX hybrid automatic repeat request round trip time timer configured based on the second preset parameter; and
when the uplink DRX hybrid automatic repeat request round trip time timer expires, start a corresponding uplink DRX retransmission timer.

Optionally, the processing unit 802 is configured to:
when a PDSCH is received and a corresponding hybrid automatic repeat request HARQ feedback is sent, start or restart a downlink DRX hybrid automatic repeat request round trip time timer configured based on the second preset parameter; and
when the downlink DRX hybrid automatic repeat request round trip time timer expires, start a corresponding downlink DRX retransmission timer.

Optionally, the processing unit 802 is configured to:
when a PUSCH is sent, determine an LCH that is for data transmission on the PUSCH;
start or restart an uplink DRX hybrid automatic repeat request round trip time timer configured based on a DRX parameter associated with the LCH, or start or restart an uplink DRX hybrid automatic repeat request round trip time timer configured based on a DRX parameter associated with a DRB corresponding to the LCH, or start or restart an uplink DRX hybrid automatic repeat request round trip time timer configured based on a DRX parameter associated with an LCG to which the LCH belongs; and
when the uplink DRX hybrid automatic repeat request round trip time timer expires, start a corresponding uplink DRX retransmission timer.

Optionally, the processing unit 802 is configured to:
when a PDSCH is received, decode data on the PDSCH, and determining an LCH for buffering the data;
when a HARQ feedback of the PDSCH is sent, start or restart a downlink DRX hybrid automatic repeat request round trip time timer configured based on a DRX parameter associated with the LCH, or start or restart a downlink DRX hybrid automatic repeat request round trip time timer configured based on a DRX parameter associated with a DRB corresponding to the LCH, or start or restart a downlink DRX hybrid automatic repeat request round trip time timer configured based on a DRX parameter associated with an LCG to which the LCH belongs; and
when the downlink DRX hybrid automatic repeat request round trip time timer expires, start a corresponding downlink DRX retransmission timer.

Optionally, the RRC signaling further includes carriers respectively associated with the plurality of groups of DRX parameters, and the carrier is associated with a cell or a bandwidth part BWP. Any DRX configuration information element in the RRC signaling carries a corresponding cell identifier, a corresponding cell group identifier, or a corresponding BWP identifier; or any cell configuration information element in the RRC signaling carries a corresponding DRX index; or any cell group configuration information element in the RRC signaling carries a corresponding DRX index; or any BWP configuration information element in the RRC signaling carries a corresponding DRX index.

Optionally, the processing unit 802 is configured to:
when a PDCCH indicating initial transmission is received on a first carrier, start or restart a DRX inactivity timer corresponding to the first carrier.

Optionally, the processing unit 802 is configured to:
when data transmission is performed on a first carrier, start or restart a DRX hybrid automatic repeat request round trip time timer corresponding to the first carrier; and
when the DRX hybrid automatic repeat request round trip time timer expires, start a corresponding DRX retransmission timer.

Optionally, the communication unit 801 is configured to receive a plurality of groups of secondary DRX parameters corresponding to the plurality of groups of DRX parameters, where the secondary DRX parameter includes a DRX on-duration timer and a DRX inactivity timer.

Optionally, the processing unit 802 is configured to:
configure one corresponding group of secondary DRX parameters for each group of DRX parameters; or
specify a group of corresponding DRX parameters for each group of secondary DRX parameters; or
configure the plurality of groups of secondary DRX parameters based on one group of specified DRX parameters.

For specific execution procedures of the communication unit 801 and the processing unit 802 in this implementation, refer to descriptions in the method embodiment corresponding to FIG. 4. Details are not described herein again. In the network configuration method implemented by the communication apparatus, a plurality of groups of DRX parameters configured for different data flows may be received, and a related parameter such as a DRX cycle in each group of DRX parameters is configured differently, so that the DRX parameters can better match features of different data flows, to avoid an extra delay, reduce delays of the data flows, and help improve a network capacity and reduce energy consumption of the terminal device.

In another possible implementation, the processing unit 802 is configured to determine a plurality of groups of discontinuous reception DRX parameters, where any group of DRX parameters in the plurality of groups of DRX parameters includes a DRX cycle, and the DRX cycle is determined based on a data arrival periodicity of a data flow corresponding to the group of DRX parameters or a transmission periodicity of data on a carrier. The communication unit 801 is configured to send the plurality of groups of DRX parameters to a terminal device.

Optionally, the communication unit 801 is configured to send RRC signaling to the terminal device. The RRC signaling includes a plurality of DRX configuration information elements. One DRX configuration information element corresponds to one group of DRX parameters, the DRX configuration information element includes a DRX index, and the DRX index is used to associate a corresponding DXR parameter.

Optionally, the any group of DRX parameters in the plurality of groups of DRX parameters further includes one or more of the following parameters:
a DRX on-duration timer, indicating duration in which the terminal device is in an active state;
a DRX inactivity timer, indicating duration in which the terminal device monitors, after receiving a PDCCH for initial transmission, the PDCCH;
a DRX hybrid automatic repeat request round trip time timer, indicating a minimum quantity of interval symbols between next retransmission and current transmission;
a DRX retransmission timer, indicating maximum duration for which the terminal device waits until data retransmission when the terminal device is in the active state;
a DRX start offset, indicating a start subframe of the DRX cycle; and
a DRX slot offset, indicating duration by which starting of the DRX on-duration timer is delayed backward from a front boundary of the start subframe of the DRX cycle.

Optionally, when any DRX configuration information element does not include all parameters in a corresponding group of DRX parameters, a value of a parameter that is not included is a default value, and the default value is a parameter value configured by an access network device according to a protocol.

Optionally, DRX cycles and/or DRX start offsets of any two groups of DRX parameters in the plurality of groups of DRX parameters are different. A start position of the DRX on-duration timer in the any group of DRX parameters is configured based on the DRX cycle, the DRX start offset, and the DRX slot offset in the group of DRX parameters.

Optionally, the RRC signaling further includes data radio bearers DRBs or logical channels LCHs respectively associated with the plurality of groups of DRX parameters. Any DRX configuration information element in the RRC signaling carries a corresponding DRB identifier, a corresponding LCH identifier, or a corresponding logical channel group LCG identifier; or any DRB configuration information element in the RRC signaling carries a corresponding DRX index; or any LCH configuration information element in the RRC signaling carries a corresponding DRX index.

Optionally, the communication unit 801 is configured to send a first preset parameter to the terminal device, where the first preset parameter indicates a value of the DRX inactivity timer.

Optionally, the communication unit 801 is configured to send a second preset parameter to the terminal device, where the second preset parameter indicates a value of the DRX hybrid automatic repeat request round trip time timer.

Optionally, the RRC signaling further includes carriers respectively associated with the plurality of groups of DRX parameters, and the carrier is associated with a cell or a bandwidth part BWP. Any DRX configuration information element in the RRC signaling carries a corresponding cell identifier, a corresponding cell group identifier, or a corresponding BWP identifier; or any cell configuration information element in the RRC signaling carries a corresponding DRX index; or any cell group configuration information element in the RRC signaling carries a corresponding DRX index; or any BWP configuration information element in the RRC signaling carries a corresponding DRX index.

Optionally, the communication unit 801 is configured to send, to the terminal device, a plurality of groups of secondary DRX parameters corresponding to the plurality of groups of DRX parameters, where the secondary DRX parameter includes a DRX on-duration timer and a DRX inactivity timer.

For specific execution procedures of the communication unit 801 and the processing unit 802 in this implementation, refer to descriptions in the method embodiment corresponding to FIG. 4. Details are not described herein again. In the network configuration method implemented by the communication apparatus, a plurality of groups of DRX parameters may be configured for different data flows, and a related parameter such as a DRX cycle in each group of DRX parameters is configured differently, so that DRX configurations can better match features of different data flows, to avoid an extra delay, reduce delays of the data flows, and help improve a network capacity and reduce energy consumption of the terminal device.

The following describes a device including a plurality of functional units shown in FIG. 8. The device in this application includes the plurality of functional units shown in FIG. 8. FIG. 9 is a diagram of a communication device according to this application. The communication device is configured to implement the network configuration method in the foregoing method embodiments. The communication device 900 may alternatively be a chip system. It may be understood that the device 900 may be, for example, a terminal device, or an access network device.

The communication device 900 includes a communication interface 901 and a processor 902. The communication interface 901 may be, for example, a transceiver, an interface, a bus, a circuit, or an apparatus that can implement receiving and sending functions. The communication interface 901 is configured to communicate with another device via a transmission medium, so that the device 900 can communicate with the another device. The processor 902 is configured to perform a processing-related operation.

In a possible implementation, the communication interface 901 is configured to receive a plurality of groups of discontinuous reception DRX parameters, where any group of DRX parameters in the plurality of groups of DRX parameters includes a DRX cycle, and the DRX cycle is determined based on a data arrival periodicity of a data flow corresponding to the group of DRX parameters or a transmission periodicity of data on a carrier corresponding to the group of DRX parameters. The processor 902 is configured to: when the any group of DRX parameters indicates that a terminal device is in an active state, monitor a physical downlink control channel PDCCH.

For specific execution procedures of the communication interface 901 and the processor 902 in this implementation, refer to descriptions in the first aspect and the method embodiment corresponding to FIG. 4, or refer to descriptions of the communication unit 801 and the processing unit 802 in FIG. 8. Details are not described herein again. In the network configuration method implemented by the device, a plurality of groups of DRX parameters configured for different data flows may be received, and a related parameter such as a DRX cycle in each group of DRX parameters is configured differently, so that the DRX parameters can better match features of different data flows, to avoid an extra delay, reduce delays of the data flows, and help improve a network capacity and reduce energy consumption of the terminal device.

In another possible implementation, the processor 902 is configured to determine a plurality of groups of DRX parameters, where any group of DRX parameters in the plurality of groups of DRX parameters includes a DRX cycle, and the DRX cycle is determined based on a data arrival periodicity of a data flow corresponding to the group of DRX parameters or a transmission periodicity of data on a carrier. The communication interface 901 is configured to send the plurality of groups of DRX parameters to the terminal device.

For specific execution procedures of the communication interface 901 and the processor 902 in this implementation, refer to descriptions in the first aspect and the method embodiment corresponding to FIG. 4, or refer to descriptions of the communication unit 801 and the processing unit 802 in FIG. 8. Details are not described herein again. In the network configuration method implemented by the device, a plurality of groups of DRX parameters may be configured for different data flows, and a related parameter such as a DRX cycle in each group of DRX parameters is configured differently, so that DRX configurations can better match features of different data flows, to avoid an extra delay, reduce delays of the data flows, and help improve a network capacity and reduce energy consumption of the terminal device.

Optionally, the device 900 may further include at least one memory 903, configured to store program instructions and/or data. In an implementation, the memory is coupled to the processor. The coupling in this application is an indirect coupling or a communication connection between apparatuses, units, or modules, and may be in an electrical form, a mechanical form, or another form, and is used for information exchange between the apparatuses, the units, or the modules. The processor may perform an operation in collaboration with the memory. The processor may execute the program instructions stored in the memory. The at least one memory and the processor are integrated together.

In this application, a specific connection medium between the communication interface, the processor, and the memory is not limited. For example, the memory, the processor, and the communication interface are connected through a bus. The bus 904 is represented by using a thick line in FIG. 9. A connection manner between other components is merely an example for description, and is not limited thereto. The bus may be classified into an address bus, a data bus, a control bus, and the like. For ease of representation, only one thick line is used to represent the bus in FIG. 9, but this does not mean that there is only one bus or only one type of bus.

In this application, the processor may be a general-purpose processor, a digital signal processor, an application-specific integrated circuit, a field programmable gate array or another programmable logic device, a discrete gate or transistor logic device, or a discrete hardware component, and may implement or perform the method, steps, and logical block diagram disclosed in this application. The general-purpose processor may be a microprocessor, any conventional processor, or the like. The steps of the method disclosed with reference to this application may be directly implemented by a hardware processor, or may be implemented by a combination of hardware and a software module in a processor.

In this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction structure or a data structure and that can be accessed by a computer, but is not limited thereto. The memory in this application may alternatively be a circuit or any other apparatus that can implement a storage function, and is configured to store program instructions and/or data.

This application provides a communication system, where the communication system includes the terminal device and the access network device in the embodiment corresponding to FIG. 4.

This application provides a computer-readable storage medium. The computer-readable storage medium stores a program or instructions. When the program is run or the instructions are run on a computer, the computer is enabled to perform the network configuration method in the embodiment corresponding to FIG. 4.

This application provides a computer program product. The computer program product includes instructions. When the instructions are run on a computer, the computer is enabled to perform the network configuration method in the embodiment corresponding to FIG. 4.

This application provides a chip or a chip system. The chip or the chip system includes at least one processor and an interface. The interface and the at least one processor are interconnected through a line. The at least one processor is configured to run a computer program or instructions, to perform the network configuration method in the embodiment corresponding to FIG. 4.

The interface in the chip may be an input/output interface, a pin, a circuit, or the like.

The chip system may be a system on chip (system on chip, SoC), or may be a baseband chip, or the like. The baseband chip may include a processor, a channel encoder, a digital signal processor, a modem, an interface module, and the like.

In an implementation, the chip or the chip system described above in this application further includes at least one memory, and the at least one memory stores instructions. The memory may be a storage unit inside the chip, for example, a register or a cache, or may be a storage unit (for example, a read-only memory or a random access memory) of the chip.

All or some of the technical solutions provided in this application may be implemented by using software, hardware, firmware, or any combination thereof. When software is used to implement the technical solutions, all or some of the technical solutions may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, on the premise that there is no logical conflict, embodiments may be mutually referenced. For example, methods and/or terms in the method embodiments may be mutually referenced. For example, functions and/or terms in the apparatus embodiments may be mutually referenced. For example, functions and/or terms in the apparatus embodiments and the method embodiments may be mutually referenced.

It is clear that a person skilled in the art can make various modifications and variations to this application without departing from the scope of this application. This application is intended to cover these modifications and variations of this application provided that they fall within the scope of protection defined by the claims of this application and their equivalent technologies.

## Claims

1. A network configuration method, comprising:
receiving a plurality of groups of discontinuous reception DRX parameters, wherein
any group of DRX parameters in the plurality of groups of DRX parameters comprises a DRX cycle, and the DRX cycle is determined based on a data arrival periodicity of a data flow corresponding to the group of DRX parameters or a transmission periodicity of data on a carrier corresponding to the group of DRX parameters; and
when the any group of DRX parameters indicates that a terminal device is in an active state, monitoring a physical downlink control channel PDCCH.

2. The method according to claim 1, wherein the receiving a plurality of groups of discontinuous DRX parameters comprises:
receiving radio resource control RRC signaling, wherein the RRC signaling comprises a plurality of DRX configuration information elements, wherein
one DRX configuration information element corresponds to one group of DRX parameters, and
the DRX configuration information element comprises a DRX index, and the DRX index is used to associate a corresponding DXR parameter.

3. The method according to claim 1 or 2, wherein the any group of DRX parameters in the plurality of groups of DRX parameters further comprises one or more of the following parameters:
a DRX on-duration timer, indicating duration in which the terminal device is in the active state;
a DRX inactivity timer, indicating duration in which the terminal device monitors, after receiving a PDCCH for initial transmission, the PDCCH;
a DRX hybrid automatic repeat request round trip time timer, indicating a minimum quantity of interval symbols between next retransmission and current transmission;
a DRX retransmission timer, indicating maximum duration for which the terminal device waits until data retransmission when the terminal device is in the active state;
a DRX start offset, indicating a start subframe of the DRX cycle; or
a DRX slot offset, indicating duration by which starting of the DRX on-duration timer is delayed backward from a front boundary of the start subframe of the DRX cycle.

4. The method according to claim 3, wherein
when any DRX configuration information element does not comprise all parameters in a corresponding group of DRX parameters, a value of a parameter that is not comprised is a default value; and
the default value is a parameter value configured by an access network device according to a protocol.

5. The method according to claim 3, wherein
DRX cycles and/or DRX start offsets of any two groups of DRX parameters in the plurality of groups of DRX parameters are different; and
a start position of a DRX on-duration timer in any group of DRX parameters is configured based on a DRX cycle, a DRX start offset, and a DRX slot offset in the group of DRX parameters.

6. The method according to claim 2, wherein
the RRC signaling further comprises data radio bearers DRBs or logical channels LCHs respectively associated with the plurality of groups of DRX parameters, wherein
any DRX configuration information element in the RRC signaling carries a corresponding DRB identifier, a corresponding LCH identifier, or a corresponding logical channel group LCG identifier; or
any DRB configuration information element in the RRC signaling carries a corresponding DRX index; or
any LCH configuration information element in the RRC signaling carries a corresponding DRX index.

7. The method according to claim 3, wherein the method further comprises:
receiving a first preset parameter, wherein the first preset parameter indicates a value of the DRX inactivity timer.

8. The method according to claim 7, wherein the method further comprises:
when a PDCCH indicating initial transmission is received, starting or restarting a DRX inactivity timer configured based on the first preset parameter; or
when a PDCCH indicating initial transmission is received, starting or restarting a DRX inactivity timer configured according to a protocol.

9. The method according to claim 3, wherein the method further comprises:
when a PDCCH indicating uplink initial transmission is received, determining an LCH that is for data transmission on a physical uplink shared channel PUSCH corresponding to the PDCCH; and
starting or restarting a DRX inactivity timer configured based on a DRX parameter associated with the LCH, or starting or restarting a DRX inactivity timer configured based on a DRX parameter associated with a DRB corresponding to the LCH, or starting or restarting a DRX inactivity timer configured based on a DRX parameter associated with an LCG to which the LCH belongs.

10. The method according to claim 3, wherein the method further comprises:
when a PDCCH indicating downlink initial transmission is received, decoding data transmitted on a physical downlink shared channel PDSCH corresponding to the PDCCH, and determining an LCH for buffering the data; and
starting or restarting a DRX inactivity timer configured based on a DRX parameter associated with the LCH, or starting or restarting a DRX inactivity timer configured based on a DRX parameter associated with a DRB corresponding to the LCH, or starting or restarting a DRX inactivity timer configured based on a DRX parameter associated with an LCG to which the LCH belongs.

11. The method according to claim 3, wherein the method further comprises:
when a PDCCH indicating uplink initial transmission is received, determining a corresponding LCH according to a logical channel priority LCP rule; and
starting or restarting a DRX inactivity timer configured based on a DRX parameter associated with the LCH, or starting or restarting a DRX inactivity timer configured based on a DRX parameter associated with a DRB corresponding to the LCH, or starting or restarting a DRX inactivity timer configured based on a DRX parameter associated with an LCG to which the LCH belongs.

12. The method according to claim 3, wherein the method further comprises:
receiving a second preset parameter, wherein the second preset parameter indicates a value of the DRX hybrid automatic repeat request round trip time timer.

13. The method according to claim 12, wherein the method further comprises:
when a physical uplink shared channel PUSCH is sent, starting or restarting an uplink DRX hybrid automatic repeat request round trip time timer configured based on the second preset parameter; and
when the uplink DRX hybrid automatic repeat request round trip time timer expires, starting a corresponding uplink DRX retransmission timer.

14. The method according to claim 12, wherein the method further comprises:
when a PDSCH is received and a corresponding hybrid automatic repeat request HARQ feedback is sent, starting or restarting a downlink DRX hybrid automatic repeat request round trip time timer configured based on the second preset parameter; and
when the downlink DRX hybrid automatic repeat request round trip time timer expires, starting a corresponding downlink DRX retransmission timer.

15. The method according to claim 3, wherein the method further comprises:
when a PUSCH is sent, determining an LCH that is for data transmission on the PUSCH;
starting or restarting an uplink DRX hybrid automatic repeat request round trip time timer configured based on a DRX parameter associated with the LCH, or starting or restarting an uplink DRX hybrid automatic repeat request round trip time timer configured based on a DRX parameter associated with a DRB corresponding to the LCH, or starting or restarting an uplink DRX hybrid automatic repeat request round trip time timer configured based on a DRX parameter associated with an LCG to which the LCH belongs; and
when the uplink DRX hybrid automatic repeat request round trip time timer expires, starting a corresponding uplink DRX retransmission timer.

16. The method according to claim 3, wherein the method further comprises:
when a PDSCH is received, decoding data on the PDSCH, and determining an LCH for buffering the data;
when a HARQ feedback of the PDSCH is sent, starting or restarting a downlink DRX hybrid automatic repeat request round trip time timer configured based on a DRX parameter associated with the LCH, or starting or restarting a downlink DRX hybrid automatic repeat request round trip time timer configured based on a DRX parameter associated with a DRB corresponding to the LCH, or starting or restarting a downlink DRX hybrid automatic repeat request round trip time timer configured based on a DRX parameter associated with an LCG to which the LCH belongs; and
when the downlink DRX hybrid automatic repeat request round trip time timer expires, starting a corresponding downlink DRX retransmission timer.

17. The method according to claim 2, wherein
the RRC signaling further comprises carriers respectively associated with the plurality of groups of DRX parameters, and the carrier is associated with a cell or a bandwidth part BWP, wherein
any DRX configuration information element in the RRC signaling carries a corresponding cell identifier, a corresponding cell group identifier, or a corresponding BWP identifier; or
any cell configuration information element in the RRC signaling carries a corresponding DRX index; or
any cell group configuration information element in the RRC signaling carries a corresponding DRX index; or
any BWP configuration information element in the RRC signaling carries a corresponding DRX index.

18. The method according to claim 17, wherein the method further comprises:
when a PDCCH indicating initial transmission is received on a first carrier, starting or restarting a DRX inactivity timer corresponding to the first carrier.

19. The method according to claim 17, wherein the method further comprises:
when data transmission is performed on a first carrier, starting or restarting a DRX hybrid automatic repeat request round trip time timer corresponding to the first carrier; and
when the DRX hybrid automatic repeat request round trip time timer expires, starting a corresponding DRX retransmission timer.

20. The method according to claim 1, wherein the method further comprises:
receiving a plurality of groups of secondary DRX parameters corresponding to the plurality of groups of DRX parameters, wherein
the secondary DRX parameter comprises a DRX on-duration timer and a DRX inactivity timer.

21. The method according to claim 20, wherein the method further comprises:
configuring one corresponding group of secondary DRX parameters for each group of DRX parameters; or
specifying a group of corresponding DRX parameters for each group of secondary DRX parameters; or
configuring the plurality of groups of secondary DRX parameters based on one group of specified DRX parameters.

22. A communication apparatus, comprising:
a communication unit, configured to receive a plurality of groups of DRX parameters, wherein
any group of DRX parameters in the plurality of groups of DRX parameters comprises a DRX cycle, and the DRX cycle is determined based on a data arrival periodicity of a data flow corresponding to the group of DRX parameters or a transmission periodicity of data on a carrier corresponding to the group of DRX parameters; and
a processing unit, configured to: when the any group of DRX parameters indicates that a terminal device is in an active state, monitor a PDCCH.

23. A communication device, comprising a processor, wherein the processor is coupled to a memory, the memory is configured to store instructions, and when the instructions are executed by the processor, the method according to any one of claims 1 to 21 is performed.

24. A chip, comprising a processor and an interface, wherein
the processor is configured to read instructions to perform the method according to any one of claims 1 to 21.

25. A computer-readable storage medium, wherein the computer-readable storage medium stores instructions; and when the instructions are run on a computer, the computer is enabled to perform the method according to any one of claims 1 to 21.
